# EUROPEAN PATENT APPLICATION

(11) **EP 4 793 632 A1**
(43) Date of publication of application: **19.08.2026**
(21) Application number: 25864531.6
(22) Date of filing: 17.06.2025
(51) Int. Cl.: G01N 21/88, G01N 21/954, G01N 21/956

(54) **SECONDARY BATTERY INSPECTION DEVICE**

(30) Priority: 24.12.2024 KR 20240195018
(71) Applicant: LG ENERGY SOLUTION, LTD., Seoul 07335 (KR)
(72) Inventor: LEE, Seung Eun, Daejeon 34122 (KR); PARK, Sung Woo, Daejeon 34122 (KR); KIM, Tae Young, Daejeon 34122 (KR)
(74) Representative: Goddar, Heinz J.
(86) International application number: PCT/KR2025/008351
(87) International publication number: WO 2026/141802

(57) **Abstract**

A secondary battery inspection apparatus according to an embodiment of the present disclosure for solving the above problems includes a plurality of first mirrors formed radially to be spaced apart from a central axis of a body by a first radius; a plurality of second mirrors formed radially to be spaced apart from the central axis by a second radius smaller than the first radius; a plurality of prism mirrors disposed on the inner side of the plurality of first mirrors and the plurality of second mirrors in a direction of facing the plurality of first mirrors and the plurality of second mirrors, respectively, and formed radially to be spaced apart from the central axis by a third radius smaller than the second radius; and a light receiving unit that receives light reflected through the prism mirror.

## Description

### TECHNICAL FIELD

### CROSS-REFERENCE TO RELATED APPLICATIONS

The present application is based on and claims priority from Korean Patent Application No. 10-2024-0195018, filed on December 24, 2024, with the Korean Intellectual Property Office, the disclosure of which is incorporated herein in its entirety by reference.

### TECHNICAL FIELD

The present disclosure relates to a secondary battery inspection apparatus, and more specifically, to a secondary battery inspection apparatus capable of performing inspections on both the outside and inside of a battery can of a secondary battery in a single procedure, thereby reducing inspection costs and time and increasing the utilization of equipment space.

### BACKGROUND ART

In general, there are various types of a secondary battery, such as a nickel cadmium battery, a nickel hydrogen battery, a lithium-ion battery, a lithium-ion polymer battery, and a lithium metal battery. Such a secondary battery is widely used not only in small products such as smartphones, laptop computers, tablet PCs, smart watches, smart glasses, portable gaming devices, and electric bicycles, but also in large products requiring high power such as electric vehicles or hybrid vehicles, in energy storage systems (ESSs) storing surplus generated power or renewable energy, and in power storage devices for backup.

The secondary battery includes an electrode assembly formed by alternately laminating electrodes and separators, and a battery case accommodating the electrode assembly therein. Such a secondary battery is classified into a pouch type and a can type depending on the type of the battery case accommodating the electrode assembly. The pouch type accommodates the electrode assembly in a pouch type battery case made of a flexible material. And, the can type accommodates the electrode assembly in a can type battery case made of a hard material such as metal, and is classified into a cylindrical type and a prismatic type depending on the shape thereof.

In the case of a conventional cylindrical secondary battery, separate electrode tabs or leads exist to connect the current collector plate and the cap assembly, and thus there is no need for welding the current collector plate and the battery can. However, in the case of a secondary battery with a tab-less structure introduced recently, there are no electrode tabs or leads, and thus welding should be performed on the current collector plate and the battery can to electrically connect the current collector plate to the battery can.

When welding is performed, a weld bead where a trace of welding is left is formed in a welding area between the current collector plate and the battery can, so an inspection of the inside of the cylindrical battery can should be performed. And, when welding is performed, a back bead is formed on the opposite surface of the welding area, so an inspection of the outside of the cylindrical battery can should also be performed.

In this way, in the cylindrical battery can, the weld bead and the back bead are formed on the inside and outside of the battery can, respectively, in the same welding area where welding is performed. However, conventionally, inspections of the outside and the inside of the cylindrical battery can were performed separately, which caused the inconvenience of performing the inspection procedure twice and required a lot of time for the inspections. Additionally, since two types of inspection modules, such as an external inspection module and an internal inspection module of the cylindrical battery can, should be prepared separately, costs for installation and maintenance were high, and there was also a problem of the space inside the equipment being narrowed.

### DISCLOSURE

### TECHNICAL PROBLEM

The present disclosure provides a secondary battery inspection apparatus capable of performing inspections on both the outside and inside of a battery can of a secondary battery in a single procedure, thereby reducing inspection costs and time and increasing the utilization of equipment space.

The technical problems of the present disclosure are not limited to the above-described problems, and other problems not mentioned herein may be clearly understood by those skilled in the art from the following description of the present disclosure.

### TECHNICAL SOLUTION

A secondary battery inspection apparatus according to an embodiment of the present disclosure for solving the above problems includes a plurality of first mirrors formed radially to be spaced apart from a central axis of a body by a first radius; a plurality of second mirrors formed radially to be spaced apart from the central axis by a second radius smaller than the first radius; a plurality of prism mirrors disposed on the inner side of the plurality of first mirrors and the plurality of second mirrors in a direction of facing the plurality of first mirrors and the plurality of second mirrors, respectively, and formed radially to be spaced apart from the central axis by a third radius smaller than the second radius; and a light receiving unit that receives light reflected through the prism mirror.

Alternatively, the plurality of first mirrors may be disposed at an equiangular around the central axis, and the plurality of second mirrors may be disposed at an equiangular around the central axis.

Alternatively, the plurality of first mirrors and the plurality of second mirrors may be disposed alternately one by one.

Alternatively, the plurality of first mirrors and the plurality of second mirrors may be disposed at an equiangular around the central axis.

Alternatively, the plurality of prism mirrors may be disposed at an equiangular around the central axis.

Alternatively, the plurality of prism mirrors may be formed in the same number as the sum of the number of the plurality of first mirrors and the number of the plurality of second mirrors.

Alternatively, the plurality of prism mirrors may each be disposed in a direction of facing each one of the plurality of first mirrors and the plurality of second mirrors.

Alternatively, the secondary battery inspection apparatus may further include a camera that is disposed in a direction toward the light receiving unit and photographs light incident on the light receiving unit.

Alternatively, the plurality of first mirrors may be formed to be inclined at a first inclination angle from the central axis, and the plurality of second mirrors may be formed to be inclined at a second inclination angle smaller than the first inclination angle from the central axis.

Alternatively, the secondary battery inspection apparatus may further include an adjustment unit that adjusts the first radius, the first inclination angle, the second radius, and the second inclination angle.

Alternatively, the adjustment unit may include an upper adjustment bolt that moves an upper part of the plurality of first mirrors or the plurality of second mirrors; and a lower adjustment bolt that moves a lower part of the plurality of first mirrors or the plurality of second mirrors.

Alternatively, the secondary battery inspection apparatus may further include an actuator that rotates the plurality of first mirrors and the plurality of second mirrors around the central axis of the body.

Alternatively, the actuator may rotate the plurality of first mirrors and the plurality of second mirrors by an angle where the first mirror and the second mirror adjacent to each other are spaced apart.

Alternatively, the secondary battery inspection apparatus may further include a pusher that supports the secondary battery to be inspected from below and rotates around the central axis of the body.

Alternatively, the pusher may rotate by an angle where the first mirror and the second mirror adjacent to each other are spaced apart.

Alternatively, the plurality of first mirrors and the plurality of second mirrors may have a viewing angle greater than an angle where the first mirror or the second mirror adjacent thereto is spaced apart.

Other specific details of the present disclosure are included in the detailed description and drawings.

### ADVANTAGEOUS EFFECTS

According to embodiments of the present disclosure, at least the following effects are obtained.

Inspections on both the outside and inside of a battery can of a secondary battery may be performed in a single procedure using only one secondary battery inspection apparatus, thereby reducing inspection time and costs and increasing the utilization of equipment space.

The effects according to the present disclosure are not limited by the contents exemplified above, and more various effects are included in this specification.

### DESCRIPTION OF DRAWINGS

FIG. 1 is a cross-sectional view of a cylindrical secondary battery 1.
FIG. 2 is an enlarged cross-sectional view showing a beading portion 114 formed in a cylindrical battery can 11.
FIG. 3 is an enlarged cross-sectional view showing a sealing gasket 18 and a can cover 17 inserted through an opening 113 of a cylindrical battery can 11.
FIG. 4 is an enlarged cross-sectional view showing a crimping portion 115 formed by performing a crimping process on a cylindrical secondary battery 1.
FIG. 5 is an enlarged cross-sectional view showing a beading portion 114 and a second current collector plate 132 of a cylindrical secondary battery 1 being welded to be connected to each other.
FIG. 6 is a plan perspective view of a secondary battery inspection apparatus 2 according to an embodiment of the present disclosure.
FIG. 7 is a bottom perspective view of a secondary battery inspection apparatus 2 according to an embodiment of the present disclosure.
FIG. 8 is a bottom view of a secondary battery inspection apparatus 2 according to an embodiment of the present disclosure.
FIG. 9 is a cross-sectional view taken along line A-A' of FIG. 8.
FIG. 10 is a cross-sectional view taken along line B-B' of FIG. 8.
FIG. 11 is a schematic view of a secondary battery inspection apparatus 2 according to another embodiment of the present disclosure.

### BEST MODE

The advantages and features of the present disclosure, and the methods for achieving them, will become clear by referring to the embodiments described in detail below with the accompanying drawings. However, the present disclosure is not limited to the embodiments disclosed below, but may be implemented in various different forms, and the present embodiments are provided only to make the present disclosure complete and to fully inform those having ordinary skill in the art to which the present disclosure pertains of the scope of the disclosure, and the present disclosure is defined only by the scope of the claims. Throughout the specification, the same reference numerals refer to the same components.

Unless otherwise defined, all terms (including technical and scientific terms) used in this specification may be used in a sense that can be commonly understood by those having ordinary skill in the art to which the present disclosure pertains. Additionally, terms defined in commonly used dictionaries are not to be ideally or excessively interpreted unless explicitly and specifically defined.

The terms used in this specification are for the purpose of describing the embodiments and are not intended to limit the present disclosure. In this specification, the singular form includes the plural form unless specifically otherwise stated in the phrase. The terms "comprise" and/or "comprising" used in the specification do not exclude the presence or addition of one or more other components in addition to the components mentioned.

Hereinafter, preferred embodiments of the present disclosure will be described in detail with reference to the accompanying drawings.

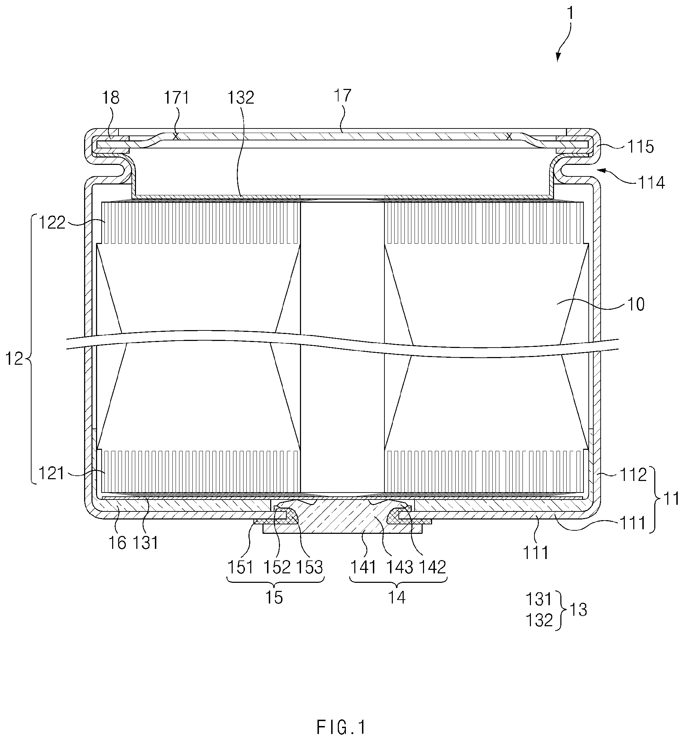

FIG. 1 is a cross-sectional view of a cylindrical secondary battery 1.

The cylindrical secondary battery 1 may be a large cylindrical secondary battery having a form factor ratio of 0.4 or more. Here, the form factor refers to a value indicating the diameter and height of the cylindrical secondary battery, and the form factor ratio refers to a ratio of the diameter Φ to the height H of the cylindrical secondary battery.

In the numerical value indicating the form factor, the first two digits indicate the diameter of the cylindrical secondary battery 1, and the next two or three digits indicate the height of the cylindrical secondary battery 1. The cylindrical secondary battery 1 may have, for example, a form factor of 46110 (diameter 46 mm, height 110 mm, form factor ratio 0.418), 4875 (diameter 48 mm, height 75 mm, form factor ratio 0.640), 48110 (diameter 48 mm, height 110 mm, form factor ratio 0.436), 4880 (diameter 48 mm, height 80 mm, form factor ratio 0.600), 4680 (diameter 46 mm, height 80 mm, form factor ratio 0.575). In particular, among secondary batteries with a recent tab-less structure, the 4680 secondary battery is a secondary battery that is larger in size, has a higher energy density per volume, reduces costs, and improves durability and lifespan compared to existing 18650 (diameter 18 mm, height 65 mm, form factor ratio 0.277) and 21700 (diameter 21 mm, height 70 mm, form factor ratio 0.3) secondary batteries, and has recently experienced increasing demand.

The cylindrical secondary battery 1 may include an electrode assembly 10, a cylindrical battery can 11, a first current collector plate 131, a second current collector plate 132, a rivet terminal 14, an insulating gasket 15, an insulator 16, a can cover 17, and a sealing gasket 18.

The electrode assembly 10 is a laminate formed by laminating electrodes and separators. Specifically, the electrode assembly 10 is a laminated structure in which two types of electrodes, such as a positive electrode and a negative electrode, having a wide plate shape, and a separator that is interposed between the electrodes and may be further disposed on one side of either electrode are laminated. This electrode assembly 10 may be a jelly roll electrode assembly 10 in which the positive electrode, the negative electrode, and the separator are each formed in a wide and long sheet shape, laminated, and then wound in one direction from one end to the other end. However, without being limited thereto, the electrode assembly 10 may be a stack type or a lamination & stack (L&S) type in which a plurality of positive electrodes, negative electrodes, and separators of a predetermined size are repeatedly and alternately stacked, or a stack & folding type in which a plurality of positive electrodes and negative electrodes of a predetermined size are laminated with a separator in a long sheet shape therebetween and then the separator is folded, and thus may have various forms. Hereinafter, the electrode assembly 10 is described as a jelly roll electrode assembly 10, but this is for convenience of description and is not intended to limit the scope of the claims.

The two types of electrodes, such as the positive electrode and the negative electrode, may each have a structure in which an active material layer is formed on an electrode current collector in the form of a metal foil or metal mesh. The active material layer is typically formed by dispersing granular active materials, conductive agents, binders, and plasticizers in a solvent, stirring them to obtain a slurry, applying the active material slurry to the electrode current collector, and then removing the solvent in the drying process. And, an electrode uncoated portion 12 where the active material layer is not formed may exist in some areas of the electrode current collector.

Conventionally, a pair of tabs or leads corresponding to each electrode are attached to these uncoated portions. And, the positive electrode tab attached to the positive electrode uncoated portion is electrically connected to the cap assembly, and the negative electrode tab attached to the negative electrode uncoated portion is electrically connected to the lower part of the battery can. However, recently, a secondary battery 1 with a tab-less structure in which no separate tab or lead is attached to the uncoated portion and a part of the uncoated portion substantially serves as an electrode tab has been introduced.

As illustrated in FIG. 1, the secondary battery 1 may be a secondary battery 1 with a tab-less structure that does not include an electrode tab. First, a long sheet-shaped positive electrode, a separator, and a negative electrode are sequentially laminated. At this time, each of the positive electrode and the negative electrode include an uncoated portion where no active material is formed, and the first electrode uncoated portion 121 and the second electrode uncoated portion 122 may each be formed long in the length direction of the long sheet-shaped electrode. And, the first electrode uncoated portion 121 and the second electrode uncoated portion 122 may be disposed in opposite directions. When this laminate is wound in one direction from one end to the other end, a jelly roll electrode assembly 10 included in the tab-less secondary battery 1 is manufactured. And, the first electrode uncoated portion 121 and the second electrode uncoated portion 122 of the electrode assembly 10 are connected to the first current collector plate 131 and the second current collector plate 132, respectively. The current collector plate 13 has a larger cross-sectional area than the strip-type electrode tab, and the resistance is inversely proportional to the cross-sectional area of the current flow path, so that when the secondary battery 1 is formed with such a structure, the internal resistance of the secondary battery 1 may be greatly reduced.

The first electrode uncoated portion 121 and the second electrode uncoated portion 122 may be formed in the form of a plurality of independently bendable segments. To this end, a metal foil cutting process such as laser notching, ultrasonic cutting, or punching may be performed on the first electrode uncoated portion 121 and the second electrode uncoated portion 122, thereby forming a plurality of segments. And, at least some of such plurality of segments may be bent toward the winding center C of the electrode assembly 10.

The current collector plate 13 and the electrode uncoated portion 12 are generally bonded by welding, and in order to improve welding properties, strong pressure should be applied to the welding area of the electrode uncoated portion 12 to bend the electrode uncoated portion 12 as flat as possible. However, when the electrode uncoated portion is not formed in the form of a plurality of segments, the shape of the uncoated portion may be deformed during this bending process, and the deformed part may contact an electrode of opposite polarity, thereby causing an internal short circuit or causing micro cracks in the uncoated portion. However, when the first electrode uncoated portion 121 and the second electrode uncoated portion 122 are formed in the form of a plurality of independently bendable segments, the stress applied to the uncoated portion during bending may be reduced, thereby minimizing deformation of and damage to the uncoated portion.

Additionally, when the first electrode uncoated portion 121 and the second electrode uncoated portion 122 are formed in the form of segments, a plurality of segments overlap each other to form a bent surface during bending, thereby increasing the welding strength with the current collector plate 13, and improving the welding characteristics with the current collector plate 13 by preventing the problem of the laser penetrating into the electrode assembly 10 to ablate the separator or active material when performing welding such as laser welding. When a plurality of segments are bent and overlap each other to form a bent surface, the current collector plates 13 may each be connected to this bent surface at both ends of the electrode assembly 10.

When the first electrode uncoated portion 121 is formed in the form of a plurality of segments, at least some of the plurality of segments protrude downward from the electrode assembly 10 based on FIG. 1. And, when such plurality of segments are bent and overlap each other to form a first electrode bent surface, the first electrode bent surface may be connected to the first current collector plate 131 by welding or the like. When the second electrode uncoated portion 122 is formed in the form of a plurality of segments, at least some of the plurality of segments protrude upward from the electrode assembly 10 based on FIG. 1. And, when such plurality of segments are bent and overlap each other to form a second electrode bent surface, the second electrode bent surface may be connected to the second current collector plate 132.

Meanwhile, an insulating layer may be further formed on the electrode. Specifically, the insulating layer may be formed to cover a part of the electrode active material layer and a part of the electrode uncoated portion 12 together along the direction in which the electrode assembly 10 is wound. When the first electrode uncoated portion 121 and the second electrode uncoated portion 122 are bent, the first electrode uncoated portion 121 and the second electrode uncoated portion 122 are positioned close to the electrodes of opposite polarity beyond the separator, which may lead to electrical contact between the positive electrode and the negative electrode, thereby potentially causing an internal short circuit. However, when the insulating layer covers a part of the electrode active material layer and a part of the uncoated portion together, the insulating layer prevents the positive electrode and the negative electrode from electrically contacting each other, thereby preventing a short circuit from occurring inside the secondary battery 1.

The cylindrical battery can 11 accommodates the electrode assembly 10 in the internal space. The battery can 11 is a case having a space where an electrode assembly 10 and an electrolyte may be accommodated inside through an opening 113 formed at one end, and is made of a metal material having electrical conductivity, such as aluminum or steel. Referring to FIG. 1, an opening 113 is formed at the upper part of the battery can 11, and the opening 113 may be covered with a can cover 17 in a later process. And, the lower part 111 and the side part 112 of the battery can 11 are connected to each other and may preferably be formed integrally. The lower part 111 of the battery can 11 is formed to be roughly flat, and when the electrode assembly 10 and the electrolyte are accommodated inside the battery can 11, the lower part 111 of the battery can 11 supports the electrode assembly 10 from below. And, the side part 112 of the battery can 11 is formed in a cylindrical shape, supports the electrode assembly 10 from the side, and preferably has a diameter larger than the diameter of the electrode assembly 10 by the size of the offset. If the diameter of the side part 112 of the battery can 11 is smaller than or equal to the diameter of the electrode assembly 10, the electrode assembly 10 is not inserted into the battery can 11. And, if the diameter of the side part 112 of the battery can 11 is excessively larger than the diameter of the electrode assembly 10, the electrode assembly 10 may shake greatly inside the battery can 11 or may be displaced from its correct position, and the space utilization of the secondary battery 1 may be reduced, thereby reducing the energy density per volume.

The rivet terminal 14 is made of a metal material having electrical conductivity, and is formed by penetrating the lower part 111 of the battery can 11 with reference to FIG. 1, and protrudes downward from the battery can 11 to be partially exposed to the outside. To this end, the rivet terminal 14 may be fixed by riveting at the lower part 111 of the battery can 11. The rivet terminal 14 may be formed by penetrating roughly the center of the lower part 111 of the battery can 11. And, this rivet terminal 14 is connected to the first current collector plate 131 by welding or the like.

Specifically, the rivet terminal 14 includes a terminal outer portion 141 exposed to the outside of the battery can 11, a terminal inner portion 142 fixed to the battery can 11 inside the battery can 11, and a terminal connection portion 143 connecting the terminal outer portion 141 and the terminal inner portion 142 to each other and penetrating a terminal hole formed in the lower part 111 of the battery can 11.

The terminal outer portion 141 is exposed to the outside of the battery can 11 and may have a disc shape, but is not limited thereto and may have various shapes such as a polygon. The terminal inner portion 142 is positioned inside the battery can 11 and is connected to the first current collector plate 131. The terminal connection portion 143 connects the terminal outer portion 141 and the terminal inner portion 142, and at this time, it is preferable to connect roughly the centers of the terminal outer portion 141 and the terminal inner portion 142.

The terminal outer portion 141, the terminal inner portion 142, and the terminal connection portion 143 may be formed integrally. Therefore, the terminal outer portion 141, the terminal connection portion 143, and the terminal inner portion 142 may approach from the outside of the terminal hole, so that the terminal inner portion 142 and the terminal connection portion 143 may be inserted into the terminal hole. And, when the terminal inner portion 142 is riveted, the terminal inner portion 142 may be deformed inside the battery can 11 and may have a shape bent toward the lower part 111 of the battery can 11. Thus, the rivet terminal 14 may be formed in the terminal hole while being fixed to the battery can 11. At this time, in order for the rivet terminal 14 to be fixed to the lower part 111 of the battery can 11 without being detached from the terminal hole again, the diameter of the terminal hole is preferably smaller than the diameters of the terminal outer portion 141 and the terminal inner portion 142. In particular, the diameter of the terminal inner portion 142 is initially formed to be smaller than the diameter of the terminal hole, and when the terminal inner portion 142 is inserted into the terminal hole and then riveted, the diameter of the terminal inner portion 142 may become larger than the diameter of the terminal hole.

The first current collector plate 131 is made of a metal material having electrical conductivity, is connected to the first electrode uncoated portion 121 of the electrode assembly 10, and at the same time, is connected to the rivet terminal 14, particularly, the terminal inner portion 142. Thus, the first current collector plate 131 serves as a passage for electrically connecting the first electrode uncoated portion 121 of the electrode assembly 10 and the rivet terminal 14. Therefore, the rivet terminal 14 may serve as a terminal of the first polarity. If the first electrode is a positive electrode, the first current collector plate 131 and the rivet terminal 14 have a positive polarity.

The second current collector plate 132 is made of a metal material having electrical conductivity, is connected to the second electrode uncoated portion 122 of the electrode assembly 10, and at the same time, is connected to the battery can 11. Thus, the second current collector plate 132 serves as a passage for electrically connecting the second electrode uncoated portion 122 of the electrode assembly 10 and the battery can 11. Therefore, the battery can 11 may serve as a negative electrode terminal. If the second electrode is a negative electrode, the second current collector plate 132 and the battery can 11 have negative polarity.

Since the rivet terminal 14 and the battery can 11 have different polarities, the rivet terminal 14 and the battery can 11 should be electrically insulated from each other. Therefore, an insulating gasket 15 made of an insulating material may be interposed between the rivet terminal 14 and the battery can 11. However, without being limited thereto, various methods may be used as long as insulation between the rivet terminal 14 and the battery can 11 may be achieved, such as by applying an insulating adhesive between the rivet terminal 14 and the battery can 11 or interposing an insulating film therebetween.

The insulating gasket 15 is interposed between the rivet terminal 14 and the lower part 111 of the battery can 11 to insulate them from each other. This insulating gasket 15 includes a gasket outer portion 151 formed between the terminal outer portion 141 and the outer surface of the lower part 111 of the battery can 11, a gasket inner portion 152 formed between the terminal inner portion 142 and the inner surface of the lower part 111 of the battery can 11, and a gasket connection portion 153 connecting the gasket outer portion 151 and the gasket inner portion 152 to each other and penetrating the terminal hole.

The gasket outer portion 151, the gasket inner portion 152, and the gasket connection portion 153 of the insulating gasket 15 may all be formed integrally. And, a gasket hole is formed at the center of the insulating gasket 15, so that the gasket outer portion 151 and the gasket inner portion 152 may have a disc ring shape, and the rivet terminal 14 penetrates the gasket hole.

In order for the gasket connection portion 153 to be inserted through the terminal hole and then fixed to the lower part 111 of the battery can 11 without being detached from the terminal hole again, the diameter of the terminal hole is preferably smaller than the diameters of the gasket outer portion 151 and the gasket inner portion 152. And, in order for the rivet terminal 14 to be inserted through the gasket hole and then fixed to the lower part 111 of the battery can 11 without being detached from the gasket hole again, the diameter of the gasket hole is preferably smaller than the diameters of the terminal outer portion 141 and the terminal inner portion 142. When the insulating gasket 15 is inserted through the terminal hole, the gasket connection portion 153 is disposed in the terminal hole, and the gasket connection portion 153 may be fixed to the lower part 111 of the battery can 11. And, when the rivet terminal 14 is inserted through the gasket hole, the terminal connection portion 143 is disposed in the gasket hole, and when the terminal inner portion 142 is riveted inside the terminal hole, the terminal inner portion 142 may be bent toward the lower part 111 of the battery can 11 inside the battery can 11, and the rivet terminal 14 may be fixed to the battery can 11.

The insulating gasket 15 is made of an insulating material, and particularly, it is preferably made of a material such as rubber, silicone, or an insulating polymer having flexibility and elasticity. If the diameter of the gasket inner portion 152 is initially formed to be larger than the diameter of the terminal hole, even if the diameter of the terminal hole is smaller than the diameters of the gasket outer portion 151 and the gasket inner portion 152, the shape of the gasket outer portion 151 or the gasket inner portion 152 may be deformed to easily penetrate and be inserted into the terminal hole. However, without being limited thereto, the diameter of the gasket inner portion 152 may be initially formed to be smaller than the diameter of the terminal hole. And, when the gasket inner portion 152 and the terminal inner portion 142 are inserted into the terminal hole and then the terminal inner portion 142 of the rivet terminal 14 is riveted inside the terminal hole, the gasket inner portion 152 may be bent together toward the lower part 111 of the battery can 11 inside the battery can 11, so that the diameter of the gasket inner portion 152 may become larger than the diameter of the terminal hole.

When the insulating gasket 15 is interposed between the rivet terminal 14 and the battery can 11 in this way, the insulating gasket 15 insulates the rivet terminal 14 and the battery can 11, and at the same time, it may be closely attached between the rivet terminal 14 and the battery can 11 to seal the space between the rivet terminal 14 and the battery can 11.

The gasket outer portion 151 may be formed flat and interposed only between the terminal outer portion 141 and the lower part 111 of the battery can 11, but is not limited thereto, and the outer circumferential surface of the gasket outer portion 151 may surround the outer circumferential surface of the terminal outer portion 141 of the rivet terminal 14, or further, may cover a part of the outer surface of the terminal outer portion 141. In this case, during the process of connecting a busbar or the like to the rivet terminal 14 to assemble a battery module or the like later, the rivet terminal 14 and the battery can 11 may be electrically connected to each other to prevent a short circuit from occurring.

Since the first current collector plate 131 and the battery can 11 also have different polarities, the first current collector plate 131 and the battery can 11 should be insulated from each other. Therefore, an insulator 16 made of a material having insulating properties may be formed between the first current collector plate 131 and the battery can 11. This insulator 16 may insulate not only between the first current collector plate 131 and the battery can 11, but also between the first electrode uncoated portion 121 and the battery can 11. To this end, the insulator 16 may have a cap shape with a bent outer region. The rivet terminal 14 should be connected to the first current collector plate 131 and be exposed to the outside while penetrating the lower part 111 of the battery can 11. Therefore, the rivet terminal 14 may be formed by penetrating roughly the center of the insulator 16.

The rivet terminal 14 serves as a terminal of the first polarity through the first current collector plate 131. And, the region of the lower part 111 of the battery can 11 that excludes the rivet terminal 14 and the insulating gasket 15 serves as a terminal of the second polarity through the second current collector plate 132. For example, if the first polarity is positive, the rivet terminal 14 serves as a positive electrode terminal, and if the second polarity is negative, the region of the lower part 111 of the battery can 11 that excludes the rivet terminal 14 and the insulating gasket 15 serves as a negative electrode terminal. Therefore, both the positive electrode terminal and the negative electrode terminal are formed in the same direction in the cylindrical secondary battery 1, and thus when assembling a plurality of secondary batteries 1 to manufacture a battery module or the like later, the structure of the battery module or the like for connecting each terminal thereto may be simplified.

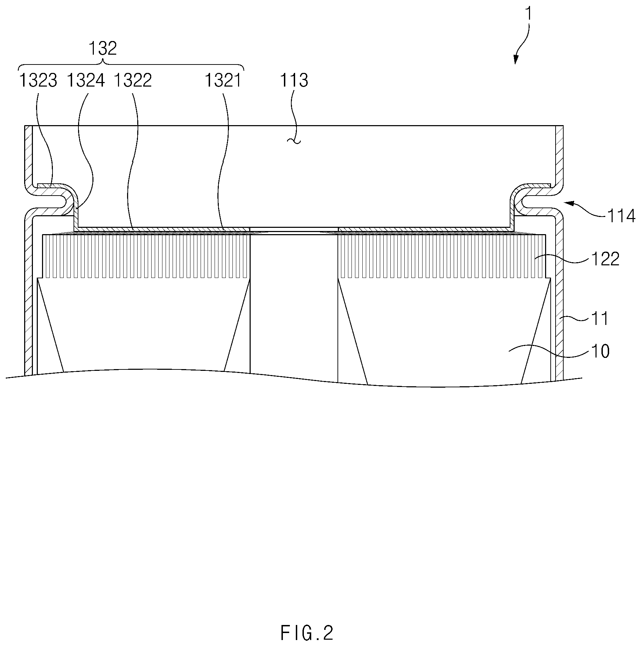

FIG. 2 is an enlarged cross-sectional view showing a beading portion 114 formed in a cylindrical battery can 11.

When the first current collector plate 131, the electrode assembly 10, the second current collector plate 132, and the electrolyte are accommodated into the battery can 11 through the opening 113 formed at the upper end of the battery can 11, a beading portion 114 is formed at a position adjacent to the opening 113. The beading portion 114 has a shape that is recessed inward from the outer circumferential surface of the battery can 11 to a predetermined depth, as illustrated in FIGS. 1 and 2. The can connection portion 1323 of the second current collector plate 132 is seated on the upper surface of the beading portion 114, and the beading portion 114 and the second current collector plate 132 are connected to each other by welding or the like. By forming this beading portion 114, it is possible to prevent the electrode assembly 10 from being detached to the outside through the opening 113 of the battery can 11 or from significantly shaking inside the battery can 11.

Recently, a cylindrical secondary battery 1 including a battery can 11 without this beading portion 114 or with a very shallow beading portion 114 has been introduced. In this case, the can connection portion 1323 of the second current collector plate 132 may be directly connected to the upper inner wall of the battery can 11 by welding or the like.

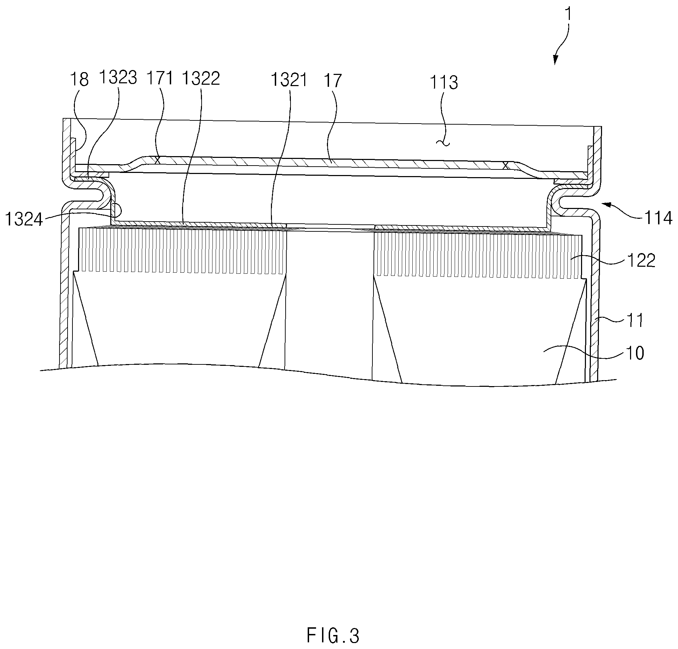

FIG. 3 is an enlarged cross-sectional view showing a sealing gasket 18 and a can cover 17 inserted through an opening 113 of a cylindrical battery can 11.

As illustrated in FIG. 3, after forming the beading portion 114, a sealing gasket 18 and a can cover 17 are inserted through the opening 113 of the battery can 11. The can cover 17 may have a roughly disc shape, and the sealing gasket 18 may have a disc ring shape along the outer circumferential surface of the can cover 17. And, the can cover 17 may be made of a material such as metal having high rigidity, and the sealing gasket 18 may be made of a material such as rubber, silicone, or insulating polymer having flexibility and elasticity to seal the space between the can cover 17 and the battery can 11.

The diameters of the sealing gasket 18 and the can cover 17 may correspond to the diameter of the opening 113 of the battery can 11. Here, corresponding means that the diameters of the sealing gasket 18 and the can cover 17 are smaller than the diameter of the opening 113 of the battery can 11 by the size of the offset. If the diameters of the sealing gasket 18 and the can cover 17 are larger than or equal to the diameter of the opening 113 of the battery can 11, the sealing gasket 18 and the can cover 17 may not be inserted into the battery can 11 through the opening 113. And, if the diameters of the sealing gasket 18 and the can cover 17 are excessively smaller than the diameter of the opening 113 of the battery can 11, the can cover 17 may not sufficiently cover the opening 113 of the battery can 11. Since the diameters of the sealing gasket 18 and the can cover 17 correspond to the diameter of the opening 113 of the battery can 11, the sealing gasket 18 and the can cover 17 may be easily inserted into the battery can 11, and when the crimping portion 115 is formed later, the can cover 17 may sufficiently cover the opening 113 of the battery can 11 and seal the inside of the battery can 11.

The can cover 17 may be made of a material such as metal. However, since the periphery of the can cover 17 is sealed by the sealing gasket 18, the can cover 17 may not conduct electricity and thus may not have polarity. However, without being limited thereto, if the can cover 17 may seal the opening 113 of the battery can 11, the can cover 17 may be directly connected to the battery can 11 by welding or the like and fixed thereto, or may be fixed thereto through a separate component. In this case, the sealing gasket 18 may not be included, and the can cover 17 may have the same polarity as the battery can 11.

The can cover 17 may include a venting portion 171 capable of discharging gas generated inside the battery can 11 to the outside when the internal pressure increases due to the gas. The venting portion 171 may be formed on at least a part of the can cover 17 to have a relatively thinner thickness than other regions of the can cover 17. Thus, when the internal pressure of the battery can 11 increases, the gas inside the battery can 11 may be discharged to the outside as the relatively thinner venting portion 171 is ruptured.

The peripheral regions of the sealing gasket 18 and the can cover 17 are seated on the upper part of the second current collector plate 132 and the upper surface of the beading surface. At this time, in order for the peripheral regions of the sealing gasket 18 and the can cover 17 to be stably seated on the upper part of the second current collector plate 132 and the upper surface of the beading surface, the upper surface of the beading surface and the can connection portion 1323 of the second current collector plate 132 may be formed to be roughly flat.

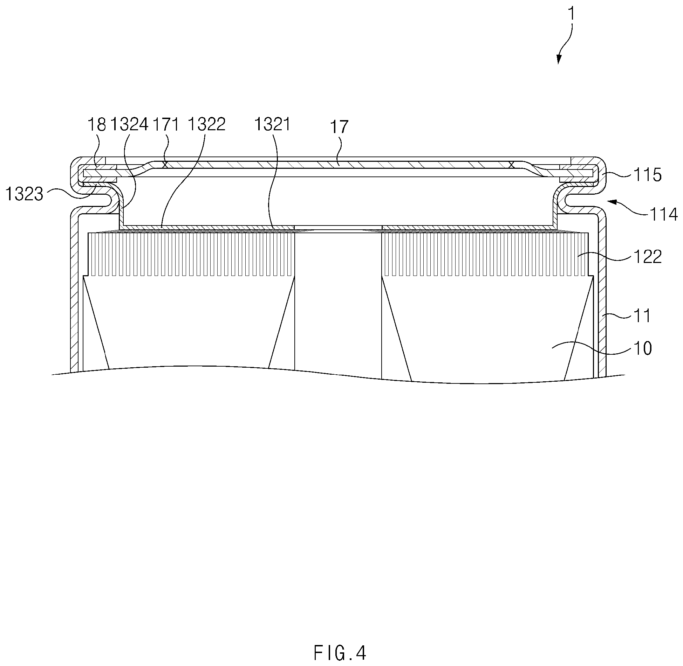

FIG. 4 is an enlarged cross-sectional view showing a crimping portion 115 formed by performing a crimping process on a cylindrical secondary battery 1.

When the sealing gasket 18 and the can cover 17 are inserted through the opening 113 of the battery can 11, the upper part of the battery can 11 forming the opening 113 of the battery can 11 is bent inward to form a crimping portion 115. As illustrated in FIGS. 1 and 4, the crimping portion 115 extends upward from the beading portion 114 and is bent in a direction toward the center of the battery can 11, thereby fixing the sealing gasket 18 and the can cover 17. And, the crimping portion 115 has a shape that covers the peripheral regions of the sealing gasket 18 and the can cover 17.

After the crimping portion 115 is formed, a sizing process is performed on the cylindrical battery can 11, so that the secondary battery 1 may be compressed in the height direction of the battery can 11. The sizing process is a process of applying pressure to the battery can 11 in the height direction to adjust the height of the secondary battery 1 to the designed form factor. When this sizing process is performed, the height of the battery can 11 is reduced, and thus the shape of the beading portion 114 may be deformed.

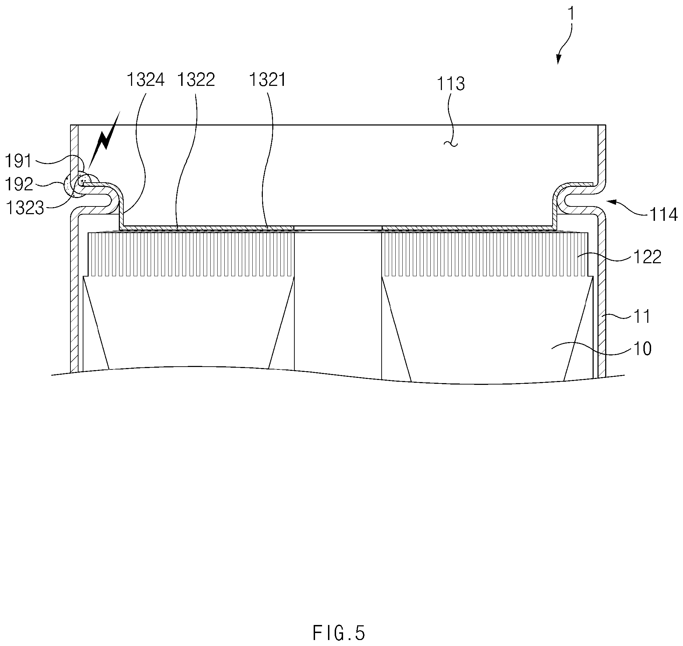

FIG. 5 is an enlarged cross-sectional view showing a beading portion 114 and a second current collector plate 132 of a cylindrical secondary battery 1 being welded to be connected to each other.

The second current collector plate 132 is connected to the second electrode uncoated portion 122 of the electrode assembly 10 and, at the same time, to the battery can 11. The second current collector plate 132 includes a central portion 1321 formed flat and supporting the electrode assembly 10 from above, a uncoated portion connection portion 1322 extending outward from the central portion 1321 and disposed on the same plane as the central portion 1321 and connected to the second electrode uncoated portion 122 of the electrode assembly 10, a can connection portion 1323 formed to be spaced apart outward from the central portion 1321 and connected to the battery can 11, and a bridge 1324 connecting the central portion 1321 and the can connection portion 1323 to each other.

The central portion 1321 is disposed above the electrode assembly 10 and supports the electrode assembly 10 from above. And, the uncoated portion connection portion 1322 is formed in plurality and extends outward from the central portion 1321, and may be disposed on the same plane as the central portion 1321. The plurality of uncoated portion connection portions 1322 may be disposed in a symmetrical shape, such as a roughly radial shape or a cross shape, around the central portion 1321, and furthermore, may be disposed in various shapes, such as an asymmetric shape, without being limited thereto. As described above, when the second electrode uncoated portion 122 protruding upward from the electrode assembly 10 is formed in the form of segments, a plurality of segments overlap each other to form a bent surface during bending, and the second electrode bent surface and the uncoated portion connection portion 1322 may be connected to each other by welding or the like. If the area of the central portion 1321 is moderately wide, the second electrode bent surface may be connected to the central portion 1321 by welding or the like.

The central portion 1321 and the uncoated portion connection portion 1322 are disposed on roughly the same plane and are connected to the second electrode bent surface of the second electrode uncoated portion 122. Therefore, they are disposed very close to the upper part of the electrode assembly 10, and may be positioned at the same height as or further below the lower surface of the beading portion 114 of the battery can 11.

The can connection portion 1323 is formed in plurality, is spaced apart outward from the central portion 1321, and may be disposed around the central portion 1321. The plurality of can connection portions 1323 may be disposed in a symmetrical shape, such as a roughly radial shape or a cross shape, around the central portion 1321, and furthermore, may be disposed in various shapes, such as an asymmetric shape, without being limited thereto. The plurality of can connection portions 1323 are each spaced apart along the periphery of the central portion 1321, and at least one can connection portion 1323 may be formed between neighboring uncoated portion connection portions 1322.

The plurality of can connection portions 1323 each extend toward the inner surface of the side wall of the battery can 11, and particularly, when the battery can 11 includes a beading portion 114, they extend toward the beading portion 114. And, the can connection portions 1323 are seated on the upper surface of the beading portion 114, and the beading portion 114 and the can connection portions 1323 are connected to each other by welding or the like later. In the case of the battery can 11 in which the beading portion 114 does not exist or the depth of the beading portion 114 is very shallow, the can connection portions 1323 of the second current collector plate 132 may be directly connected to the upper inner wall of the battery can 11 by welding or the like.

The bridge 1324 connects the central portion 1321 and the can connection portion 1323 to each other. This bridge 1324 may be formed in plurality, and may be formed in the same number as the plurality of can connection portions 1323. However, without being limited thereto, the plurality of bridges 1324 may connect one can connection portion 1323 to the central portion 1321. As described above, the central portion 1321 is positioned at the same height as or further below the lower surface of the beading portion 114 of the battery can 11, but the can connection portion 1323 is seated on the upper surface of the beading portion 114. That is, the central portion 1321 and the can connection portion 1323 are positioned at different heights. Since the bridge 1324 connects the central portion 1321 and the can connection portion 1323 positioned at different heights to each other, the bridge 1324 may have a shape that is inclined at a specific inclination angle from the central portion 1321.

The uncoated portion connection portion 1322 and the can connection portion 1323 are indirectly connected through the central portion 1321. That is, the second electrode uncoated portion 122 and the uncoated portion connection portion 1322 are connected, the uncoated portion connection portion 1322 is connected to the can connection portion 1323 through the central portion 1321 and the bridge 1324, and the can connection portion 1323 is connected to the battery can 11. Therefore, the second electrode uncoated portion 122 and the battery can 11 may be electrically connected to each other.

In the case of a conventional cylindrical secondary battery 1, since a separate electrode tab or lead existed to connect the current collector plate 13 and the cap assembly to each other, there was no need for the current collector plate 13 to be seated on the upper surface of the beading portion 114, and there was no need to perform welding between the current collector plate 13 and the beading portion 114. However, in the case of a recently introduced secondary battery 1 with a tab-less structure, since there is no electrode tab or lead, welding should be performed between the can connection portion 1323 of the second current collector plate 132 and the beading portion 114 of the battery can 11 in order to electrically connect the second current collector plate 132 to the battery can 11.

Welding or the like may be performed to connect the can connection portion 1323 of the second current collector plate 132 and the beading portion 114 of the battery can 11 to each other, and for example, laser welding, ultrasonic welding, spot welding, or the like may be applied. Among them, spot welding, which may be performed quickly and strongly on thin metal members, is most preferable.

As illustrated in FIG. 5, when welding is performed, a weld bead 191 where a trace of welding is left in the welding area is formed. The weld bead 191 is formed between the can connection portion 1323 and the beading portion 114, and when spot welding is performed once for each can connection portion 1323, the weld bead 191 may be formed in a dot shape. However, when spot welding is performed several times for each can connection portion 1323, the weld bead 191 may be formed in a specific pattern.

Whether welding is defective or not may be determined based on the shape, size, and color of the weld bead 191. If the welding result is good, the coupling force between the can connection portion 1323 and the beading portion 114 is improved, and a stable electrical connection may be secured. On the other hand, if the welding result is defective, the welding strength between the can connection portion 1323 and the beading portion 114 is reduced, and thus they may be easily separated from each other even with a small impact. Additionally, the resistance of the welding area becomes extremely large, so that a smooth electrical flow is not secured, and a large amount of heat may be generated in the welding area. Furthermore, as the internal airtightness of the battery can 11 is weakened, a problem of electrolyte leakage inside the battery can 11 to the outside may occur.

Therefore, it is necessary to inspect whether welding is defective by analyzing the shape, size, and color of the weld bead 191 formed in the welding area between the can connection portion 1323 and the beading portion 114, and to this end, an inspection of the inside of the cylindrical battery can 11 should be performed before inserting the sealing gasket 18 and the can cover 17 into the battery can 11.

Meanwhile, when welding is performed, a back bead 192 may be formed on the opposite surface of the welding area. The back bead 192 refers to a bead formed when the weld pool generated during welding melts and flows out to the opposite side of the welding area and solidifies. Whether welding is defective or not may be determined based on the shape, size, and color of this back bead 192.

Therefore, it is necessary to inspect whether welding is defective by analyzing the shape, size, and color of the back bead 192 formed on the opposite surface of the welding area between the can connection portion 1323 and the beading portion 114, and to this end, an inspection of the outside of the cylindrical battery can 11 should be performed.

In this way, in the cylindrical battery can 11, the weld bead 191 and the back bead 192 are formed on the inside and outside of the battery can 11, respectively, in the same welding area where welding is performed. However, conventionally, inspections of the outside and the inside of the cylindrical battery can 11 were performed separately, which caused the inconvenience of performing the inspection procedure twice and required a lot of time for the inspections. Additionally, since two types of inspection modules, such as an external inspection module and an internal inspection module of the cylindrical battery can 11, should be prepared separately, costs for installation and maintenance were high, and there was also a problem of the space inside the equipment being narrowed.

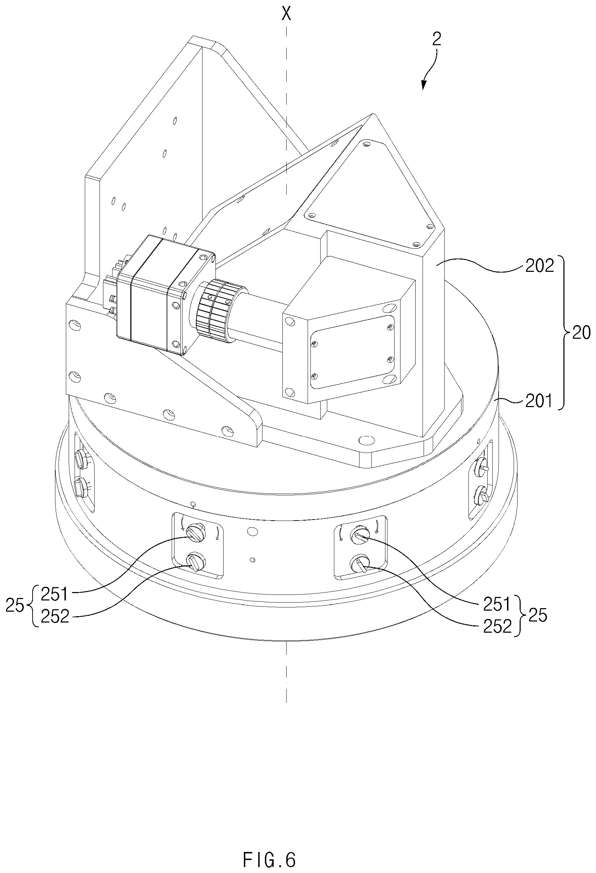

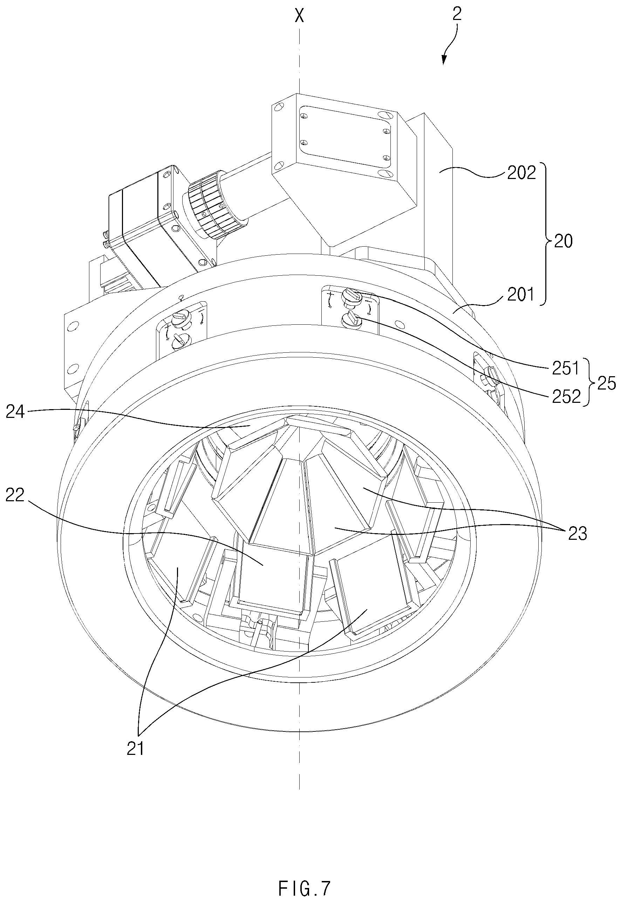

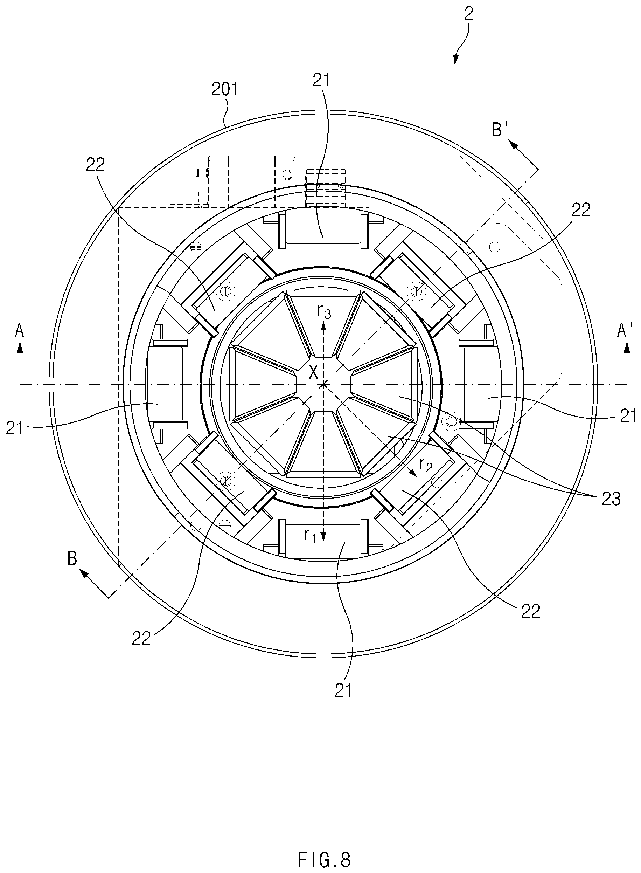

FIG. 6 is a plan perspective view of a secondary battery inspection apparatus 2 according to an embodiment of the present disclosure, FIG. 7 is a bottom perspective view of a secondary battery inspection apparatus 2 according to an embodiment of the present disclosure, and FIG. 8 is a bottom view of a secondary battery inspection apparatus 2 according to an embodiment of the present disclosure.

A secondary battery inspection apparatus 2 according to an embodiment of the present disclosure includes a plurality of first mirrors 21 formed radially to be spaced apart from a central axis X of a body 20 by a first radius r1; a plurality of second mirrors 22 formed radially to be spaced apart from the central axis X by a second radius r2 smaller than the first radius r1; a plurality of prism mirrors 23 disposed on the inner side of the plurality of first mirrors 21 and the plurality of second mirrors 22 in a direction of facing the plurality of first mirrors 21 and the plurality of second mirrors 22, respectively, and formed radially to be spaced apart from the central axis X by a third radius r3 smaller than the second radius r2; and a light receiving unit 24 that receives light reflected through the prism mirror 23.

According to the present disclosure, inspections on both the outside and inside of a battery can 11 of a secondary battery 1 may be performed in a single procedure using only one secondary battery inspection apparatus 2, thereby reducing inspection time and costs and increasing space utilization within the equipment.

The body 20 of the secondary battery inspection apparatus 2 according to the present disclosure includes a first body 201 and a second body 202. And, the first body 201 includes a plurality of first mirrors 21, a plurality of second mirrors 22, and a prism mirror 23. The second body 202 may include a light receiving unit 24, but is not limited thereto, and the first body 201 may include the light receiving unit 24. Based on FIGS. 6 and 7, the first body 201 is a lower body 20 positioned below, and the second body 202 is an upper body 20 positioned above. However, the positions of the first body 201 and the second body 202 may vary depending on the direction in which the secondary battery inspection apparatus 2 is disposed.

A plurality of first mirrors 21 are formed radially to be spaced apart from the central axis X of the body 20 by the first radius r1, and in particular, as illustrated in FIG. 8, they are disposed repeatedly at regular angles around the central axis X, which is a so-called equiangular arrangement. If four first mirrors 21 are formed, the plurality of first mirrors 21 are disposed repeatedly at 90° intervals around the central axis X.

A plurality of second mirrors 22 are formed radially to be spaced apart from the central axis X of the body 20 by the second radius r2, and in particular, as illustrated in FIG. 8, they are disposed repeatedly at regular angles around the central axis X, which is a so-called equiangular arrangement. If four second mirrors 22 are formed, the plurality of second mirrors 22 are disposed repeatedly at 90° intervals around the central axis X.

The first radius r1 and the second radius r2 are different from each other, and in particular, the second radius r2 is smaller than the first radius r1. Therefore, the second mirror 22 is disposed closer to the central axis X of the body 20 than the first mirror 21. As will be described below, in the process of manufacturing a cylindrical secondary battery 1, the second current collector plate 132 is connected to the cylindrical battery can 11 by welding or the like, and then an incomplete cylindrical secondary battery 1 before the sealing gasket 18 and the can cover 17 are inserted into the cylindrical battery can 11 is disposed below the secondary battery inspection apparatus 2. Then, the plurality of first mirrors 21 may face the outside of the cylindrical battery can 11, and the plurality of second mirrors 22 may face the inside of the cylindrical battery can 11.

The plurality of first mirrors 21 and the plurality of second mirrors 22 may be disposed alternately one by one. That is, one second mirror 22 may be disposed between two adjacent first mirrors 21, and one first mirror 21 may be disposed between two adjacent second mirrors 22. And, the plurality of first mirrors 21 and the plurality of second mirrors 22 may be disposed at an equiangular around the central axis X. If the plurality of first mirrors 21 and the plurality of second mirrors 22 are formed in a total of eight, four each, the plurality of first mirrors 21 and the plurality of second mirrors 22 are disposed alternately and repeatedly one by one at 45° intervals.

A plurality of prism mirrors 23 are disposed on the inner side of the plurality of first mirrors 21 and the plurality of second mirrors 22 in a direction of facing the plurality of first mirrors 21 and the plurality of second mirrors 22, respectively, and are disposed radially to be spaced apart from the central axis X by a third radius r3. In particular, as illustrated in FIG. 8, they are disposed repeatedly at regular angles around the central axis X, which is a so-called equiangular arrangement. If eight prism mirrors 23 are formed, the plurality of prism mirrors 23 are disposed repeatedly at 45° intervals around the central axis X.

The second radius r2 and the third radius r3 are different from each other, and in particular, the third radius r3 is smaller than the second radius r2. Therefore, the prism mirror 23 is disposed closer to the central axis X of the body 20 than the second mirror 22.

The plurality of prism mirrors 23 may be formed in the same number as the sum of the number of the plurality of first mirrors 21 and the number of the plurality of second mirrors 22. If the plurality of first mirrors 21 and the plurality of second mirrors 22 are formed in a total of eight, four each, the plurality of prism mirrors 23 may be formed in eight. The plurality of first mirrors 21 and the plurality of second mirrors 22 are disposed in a direction toward the central axis X of the body 20, but the plurality of prism mirrors 23 are disposed in a direction of turning away from the central axis X of the body 20. Therefore, the plurality of prism mirrors 23 may each be disposed in a direction toward one of the plurality of first mirrors 21 and the plurality of second mirrors 22.

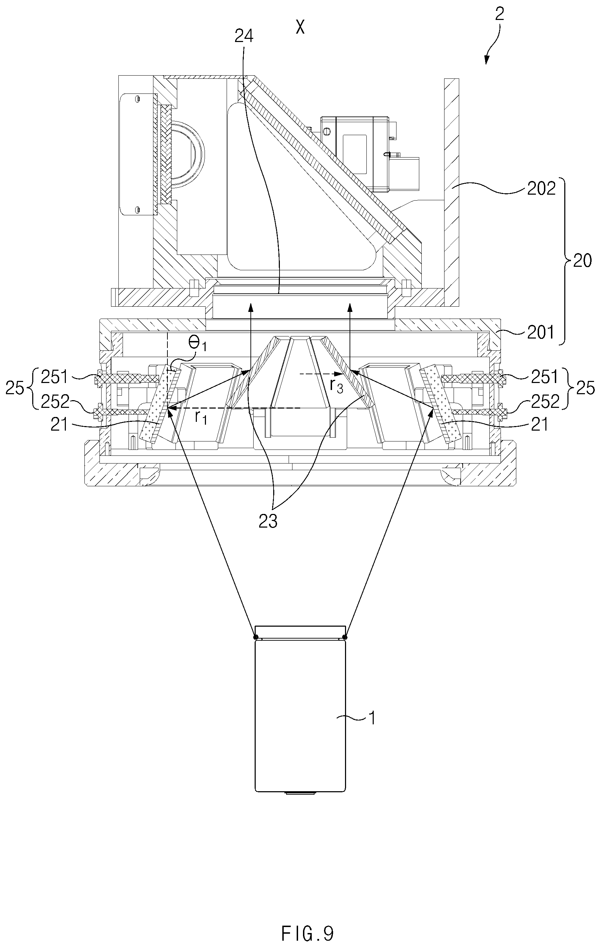

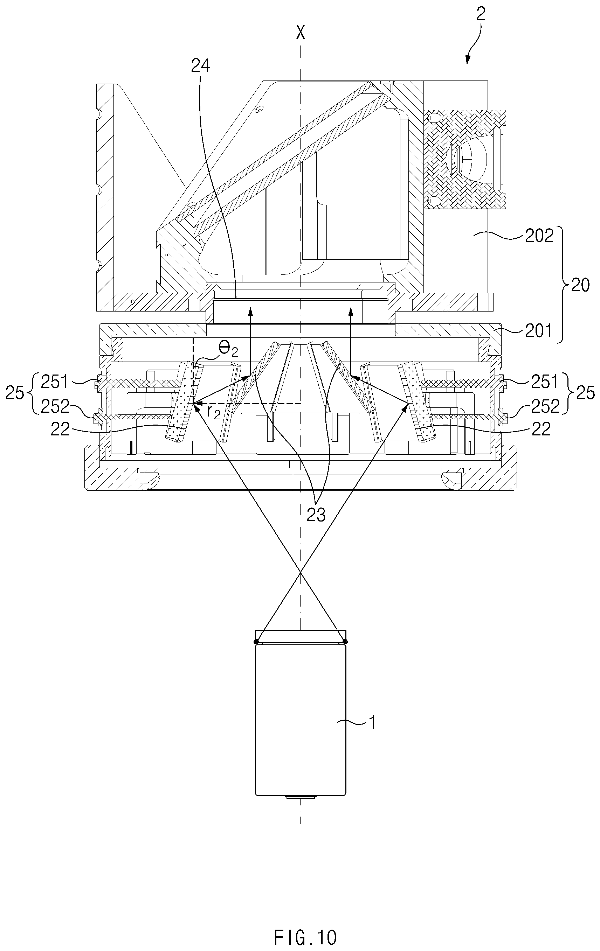

FIG. 9 is a cross-sectional view taken along line A-A' of FIG. 8, and FIG. 10 is a cross-sectional view taken along line B-B' of FIG. 8.

A secondary battery inspection apparatus 2 according to an embodiment of the present disclosure may inspect both the outside and inside of the cylindrical battery can 11 together when the cylindrical secondary battery 1 is disposed below. In the process of manufacturing a cylindrical secondary battery 1, the second current collector plate 132 is connected to the cylindrical battery can 11 by welding or the like, and then an incomplete cylindrical secondary battery 1 before the sealing gasket 18 and the can cover 17 are inserted into the cylindrical battery can 11 is disposed below the secondary battery inspection apparatus 2. Then, the plurality of first mirrors 21 may face the outside of the cylindrical battery can 11, and the plurality of second mirrors 22 may face the inside of the cylindrical battery can 11.

As illustrated in FIG. 9, the plurality of first mirrors 21 face the outside of the cylindrical battery can 11 and reflect light incident from the outside of the cylindrical battery can 11 onto the prism mirror 23, so that an image of the outside of the cylindrical battery can 11 is projected onto the plurality of first mirrors 21. In particular, a back bead 192 formed on the opposite surface of the welding area between the can connection portion 1323 and the beading portion 114 may exist on the outside of the cylindrical battery can 11. Therefore, an image of the back bead 192 existing on the outside of the cylindrical battery can 11 is projected onto the plurality of first mirrors 21. To this end, the plurality of first mirrors 21 may be formed in a number equal to or greater than the number of can connection portions 1323 of the second current collector plate 132.

As illustrated in FIG. 10, the plurality of second mirrors 22 face the inside of the cylindrical battery can 11 and reflect light incident from the inside of the cylindrical battery can 11 onto the prism mirror 23, so that an image of the inside of the cylindrical battery can 11 is projected onto the plurality of second mirrors 22. In particular, a weld bead 191 formed in the welding area between the can connection portion 1323 and the beading portion 114 may exist on the inside of the cylindrical battery can 11. Therefore, an image of the weld bead 191 existing on the inside of the cylindrical battery can 11 is projected onto the plurality of second mirrors 22. To this end, the plurality of second mirrors 22 may be formed in a number equal to or greater than the number of can connection portions 1323 of the second current collector plate 132.

Therefore, the plurality of first mirrors 21 and the plurality of second mirrors 22 may each be formed in a number equal to or greater than the number of can connection portions 1323 of the second current collector plate 132. If four can connection portions 1323 of the second current collector plate 132 are formed, four or more first mirrors 21 and four or more second mirrors 22 may be formed.

An image of the outside of the cylindrical battery can 11 is projected onto a portion of the plurality of prism mirrors 23 that respectively face the plurality of first mirrors 21, and an image of the inside of the cylindrical battery can 11 is projected onto the remaining portions of the plurality of prism mirrors 23 that respectively face the plurality of second mirrors 22. And, the plurality of prism mirrors 23 reflect light incident from the plurality of first mirrors 21 and the plurality of second mirrors 22 to the light receiving unit 24.

The secondary battery inspection apparatus 2 may further include a camera (not shown). In particular, the second body 202 of the body 20 includes a camera, which may be disposed above and in a direction toward the light receiving unit 24. This camera may include an imaging device such as a charge coupled device (CCD) or a complementary metal-oxide semiconductor (CMOS) image sensor.

The camera photographs light incident on the light receiving unit 24 to generate an image of the secondary battery 1. When the camera transmits the generated image to a separate control unit (not shown), the control unit analyzes the size and shape of the weld bead 191 and the back bead 192 of the secondary battery 1 through the image to determine whether the secondary battery 1 is defective.

Meanwhile, the plurality of first mirrors 21 are formed to be inclined at a first inclination angle θ1 from the central axis X, and the plurality of second mirrors 22 are formed to be inclined at a second inclination angle θ2 from the central axis X. The first inclination angle θ1 and the second inclination angle θ2 may be the same as each other, but are preferably different from each other, and in particular, the second inclination angle θ2 may be smaller than the first inclination angle θ1. Thus, the plurality of first mirrors 21 and the plurality of second mirrors 22 may each face a more accurate direction in the cylindrical battery can 11.

An adjustment unit 25 that adjusts the first radius r1 and the first inclination angle θ1 of the plurality of first mirrors 21, and the second radius r2 and the second inclination angle θ2 of the plurality of second mirrors 22 may be formed in the first body 201. The adjustment units 25 are formed in plurality to be formed at equal intervals along the outer circumferential surface of the first body 201 and to be disposed one each at each position corresponding to the plurality of first mirrors 21 and the plurality of second mirrors 22. And, each first adjustment unit 25 may adjust the plurality of first mirrors 21 and the plurality of second mirrors 22 one by one.

One adjustment unit 25 may include a plurality of adjustment bolts. Preferably, two adjustment bolts are formed, and these two adjustment bolts are disposed one each in the upper-lower direction. That is, the adjustment unit 25 includes an upper adjustment bolt 251 that moves the upper part of the plurality of first mirrors 21 or the plurality of second mirrors 22, and a lower adjustment bolt 252 that moves the lower part of the plurality of first mirrors 21 or the plurality of second mirrors 22.

When the upper adjustment bolt 251 positioned above is tightened, the upper adjustment bolt 251 gradually enters the inside of the first body 201 and pushes the upper part of the first mirror 21 or the second mirror 22. Then, the first inclination angle θ1 of the first mirror 21 or the second inclination angle θ2 of the second mirror 22 increases. Conversely, when the lower adjustment bolt 252 positioned below is tightened, the lower adjustment bolt 252 gradually enters the inside of the first body 201 and pushes the lower part of the first mirror 21 or the second mirror 22. Then, the first inclination angle θ1 of the first mirror 21 or the second inclination angle θ2 of the second mirror 22 decreases.

On the other hand, when the upper adjustment bolt 251 positioned above is loosened, the upper adjustment bolt 251 gradually comes out from the inside of the first body 201 and pulls the lower part of the first mirror 21 or the second mirror 22. Then, the first inclination angle θ1 of the first mirror 21 or the second inclination angle θ2 of the second mirror 22 decreases. Conversely, when the lower adjustment bolt 252 positioned relatively below is loosened, the lower adjustment bolt 252 gradually comes out from the inside of the first body 201 and pulls the lower part of the first mirror 21 or the second mirror 22. Then, the first inclination angle θ1 of the first mirror 21 or the second inclination angle θ2 of the second mirror 22 increases.

If both adjustment bolts are tightened together, both adjustment bolts gradually enter the inside of the first body 201, and thus the first radius r1 of the first mirror 21 or the second radius r2 of the second mirror 22 decreases. Conversely, if both adjustment bolts are loosened together, both adjustment bolts gradually come out from the inside of the first body 201, and thus the first radius r1 of the first mirror 21 or the second radius r2 of the second mirror 22 increases.

By adjusting the adjustment unit 25, the first radius r1 and the first inclination angle θ1 of the first mirror 21, and the second radius r2 and the second inclination angle θ2 of the second mirror 22 may be easily adjusted. Therefore, even if the size, shape, position, distance from the secondary battery inspection apparatus 2, and positions of the weld bead 191 and back bead 192 of the cylindrical battery can 11 change, the first radius r1 and the first inclination angle θ1 of the plurality of first mirrors 21, and the second radius r2 and the second inclination angle θ2 of the plurality of second mirrors 22 are adjusted using the adjustment unit 25, thereby easily photographing the outside of the cylindrical battery can 11, which may secure versatility.

The secondary battery inspection apparatus 2 may further include a separate lighting unit (not shown). The lighting unit irradiates light toward the secondary battery 1 to be inspected. And, the light reflected from the secondary battery 1 is incident on the plurality of first mirrors 21 and the plurality of second mirrors 22, respectively. Thus, the image generated by the camera photographing the secondary battery 1 is brighter and clearer, so that the weld bead 191 and back bead 192 of the secondary battery 1 may be inspected more quickly and accurately. The lighting unit may include an outer lighting unit that irradiates light toward the outside of the secondary battery 1 and an inner lighting unit that irradiates light toward the inside of the secondary battery 1. That is, by irradiating light separately toward the outside and inside of the secondary battery 1, the image of the secondary battery 1 may become brighter and clearer.

The secondary battery inspection apparatus 2 according to an embodiment of the present disclosure may further include an actuator (not shown) that rotates the plurality of first mirrors 21 and the plurality of second mirrors 22 around the central axis X of the body 20. As described above, in the cylindrical battery can 11, the weld bead 191 and the back bead 192 are formed on the inside and the outside of the battery can 11, respectively, in the same welding area where welding is performed. And, the plurality of first mirrors 21 face the outside of the cylindrical battery can 11, so that an image of the outside of the cylindrical battery can 11 is projected onto the plurality of first mirrors 21, and the plurality of second mirrors 22 face the inside of the cylindrical battery can 11, so that an image of the inside of the cylindrical battery can 11 is projected onto the plurality of second mirrors 22. However, the plurality of first mirrors 21 and the plurality of second mirrors 22 are disposed at an equiangular around the central axis X and are disposed at positions spaced apart from each other by a predetermined angle. Therefore, when the secondary battery 1 is photographed using one secondary battery inspection apparatus 2, images of the inside and outside of the battery can 11 in different welding areas are generated. Then, this may result in a problem that the weld bead 191 and the back bead 192 in the same welding area may not be photographed.

Therefore, the actuator may rotate the plurality of first mirrors 21 and the plurality of second mirrors 22 by a predetermined angle at which the adjacent first mirror 21 and second mirror 22 are spaced apart from each other. For example, if the plurality of first mirrors 21 and the plurality of second mirrors 22 are formed in a total of eight, each four, the adjacent first mirror 21 and second mirror 22 are disposed to be spaced apart from each other by 45° around the central axis X. Therefore, after the camera photographs the image of the cylindrical secondary battery 1 to generate a first image, the actuator rotates the plurality of first mirrors 21 and the plurality of second mirrors 22 by 45° around the central axis X of the body 20. That is, when the actuator rotates the plurality of first mirrors 21 and the plurality of second mirrors 22, the central axis X of the body 20 becomes the rotation axis.

Then, the camera photographs the image of the cylindrical secondary battery 1 again to generate a second image. Thus, the weld bead 191 and back bead 192 formed in the same welding area in the cylindrical battery can 11 may be photographed together. And, the control unit may determine whether welding is defective by analyzing the first image and the second image.

The actuator may rotate the first body 201 while the second body 202 is fixed. Thus, the plurality of first mirrors 21 and the plurality of second mirrors 22 formed in the first body 201 may rotate together with the first body 201. If the prism mirror is fixed to the first body 201, the prism mirror may rotate together when the first body 201 rotates, but if the prism mirror is fixed to the second body 202, the prism mirror may not rotate even if the first body 201 rotates.

Hereinafter, a method for inspecting a cylindrical battery can 11 of a cylindrical secondary battery 1 by the secondary battery inspection apparatus 2 according to an embodiment of the present disclosure will be described.

In the process of manufacturing a cylindrical secondary battery 1, the second current collector plate 132 is connected to the cylindrical battery can 11 by welding or the like, and then an incomplete cylindrical secondary battery 1 before the sealing gasket 18 and the can cover 17 are inserted into the cylindrical battery can 11 is disposed below the secondary battery inspection apparatus 2. Then, the plurality of first mirrors 21 may face the outside of the cylindrical battery can 11, and the plurality of second mirrors 22 may face the inside of the cylindrical battery can 11.

Light is incident on the plurality of first mirrors 21 from the outside of the cylindrical battery can 11. Then, an image of the outside of the cylindrical battery can 11 is projected onto the plurality of first mirrors 21, and in particular, an image of the back bead 192 formed on the outside of the cylindrical battery can 11 is projected. Meanwhile, light is incident onto the plurality of second mirrors 22 from the inside of the cylindrical battery can 11. Then, an image of the inside of the cylindrical battery can 11 is projected onto the plurality of second mirrors 22, and in particular, an image of the weld bead 191 formed on the inside of the cylindrical battery can 11 is projected.

The plurality of first mirrors 21 and the plurality of second mirrors 22 reflect light incident from the outside and inside of the cylindrical battery can 11 onto the prism mirrors 23. An image of the outside of the cylindrical battery can 11 is projected onto a portion of the plurality of prism mirrors 23 that respectively face the plurality of first mirrors 21, and an image of the inside of the cylindrical battery can 11 is projected onto the remaining portions of the plurality of prism mirrors 23 that respectively face the plurality of second mirrors 22. The plurality of prism mirrors 23 reflect light incident from the plurality of first mirrors 21 and the plurality of second mirrors 22 to the light receiving unit 24. And, the camera may photograph images of the outside and inside of the cylindrical battery can 11 through the light receiving unit 24 to generate images. The control unit analyzes the size and shape of the weld bead 191 and the back bead 192 of the secondary battery 1 through the images to determine whether the secondary battery 1 is defective.

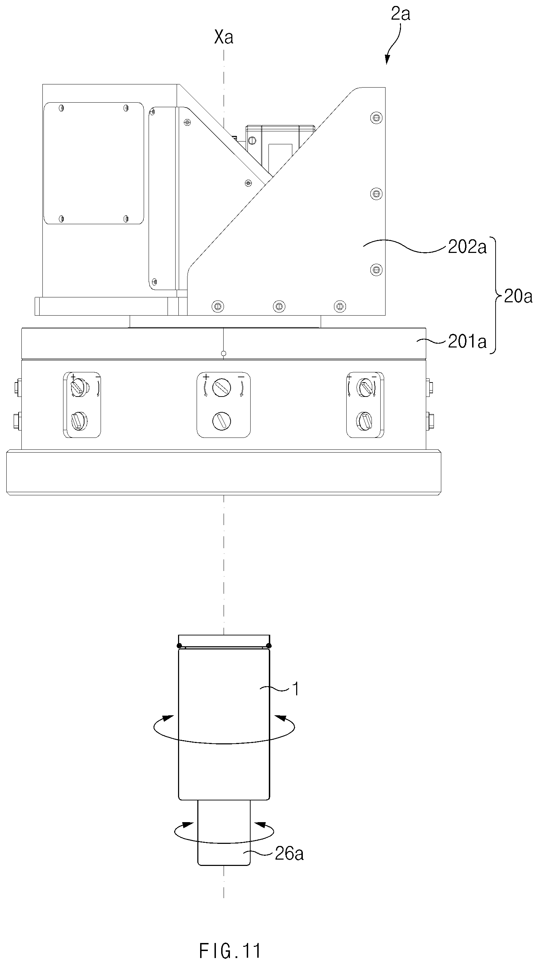

FIG. 11 is a schematic view of a secondary battery inspection apparatus 2 according to another embodiment of the present disclosure.

The secondary battery inspection apparatus 2 according to an embodiment of the present disclosure includes an actuator to rotate the plurality of first mirrors 21 and the plurality of second mirrors 22. On the other hand, a secondary battery inspection apparatus 2a according to another embodiment of the present disclosure may include a pusher 26a that is disposed below a body 20a to support the cylindrical secondary battery 1 to be inspected from below and rotates around a central axis Xa of the body 20a to rotate the cylindrical secondary battery 1. The pusher 26a may rotate by a predetermined angle at which the adjacent first mirror 21 and second mirror 22 are spaced apart.

The second current collector plate 132 is connected to the cylindrical battery can 11 by welding or the like, and then an incomplete cylindrical secondary battery 1 before the sealing gasket 18 and the can cover 17 are inserted into the cylindrical battery can 11 is seated on the upper surface of the pusher 26a. After the camera (not shown) photographs the image of the cylindrical secondary battery 1 to generate a first image, the pusher 26a rotates around the central axis Xa of the body 20a to rotate the cylindrical secondary battery 1. That is, when the pusher 26a rotates the cylindrical secondary battery 1, the central axis Xa of the body 20a becomes the rotation axis. At this time, the central axis Xa of the body 20a may coincide with the central axis of the pusher 26a, and may also coincide with the central axis of the cylindrical secondary battery 1.

According to still another embodiment of the present disclosure, an actuator or a pusher 26a may not be provided separately.

In general, when a plurality of secondary batteries 1 undergo various processes, they are arranged in a row or in a plurality of rows and move continuously. The inspection process for the secondary batteries 1 is also performed when the secondary batteries 1 moving continuously are positioned one by one in a specific area. However, if the actuator or pusher 26a is separately provided and operates whenever the secondary batteries 1 are positioned one by one in a specific area, the plurality of secondary batteries 1 should all stop each time, and thus, it may take some more time to sequentially perform the inspection on a large number of secondary batteries 1.

Therefore, according to still another embodiment of the present disclosure, the plurality of first mirrors 21 and the plurality of second mirrors 22 may have a viewing angle greater than an angle where the first mirror 21 or the second mirror 22 adjacent thereto is spaced apart.

For example, as described above, if the plurality of first mirrors 21 and the plurality of second mirrors 22 are formed in a total of eight, four each, the plurality of first mirrors 21 and the plurality of second mirrors 22 are disposed alternately and repeatedly one by one at 45° intervals. That is, the adjacent first mirror 21 and second mirror 22 are disposed at an equiangular to be spaced apart from each other by 45° around the central axis X. However, if the viewing angle of each of the plurality of first mirrors 21 and the plurality of second mirrors 22 is 45°, there may be a problem that the weld bead 191 and the back bead 192 in the same welding area may not be photographed together.

At this time, the plurality of first mirrors 21 and the plurality of second mirrors 22 may each have a viewing angle of 50° to 90°, and preferably 60° to 70°. Thus, even if an actuator or pusher 26a is not separately provided, both the outside and inside of the same welding area where the weld bead 191 and the back bead 192 are formed together in the cylindrical battery can 11 may be projected together on the plurality of first mirrors 21 and the plurality of second mirrors 22.

In order for the plurality of first mirrors 21 and the plurality of second mirrors 22 to have a viewing angle greater than an angle where the first mirror 21 or the second mirror 22 adjacent thereto is spaced apart, according to still another embodiment of the present disclosure, the plurality of first mirrors 21 and the plurality of second mirrors 22 may be formed in various ways without limitation, such as being curved mirrors rather than flat mirrors.

Those having ordinary skill in the art to which the present disclosure pertains will understand that the present disclosure may be implemented in other specific forms without changing the technical idea or essential characteristics thereof. Therefore, it should be understood that the embodiments described above are exemplary and not limiting in all respects. The scope of the present disclosure is indicated by the appended claims described below rather than the detailed description above, and various embodiments derived from the meaning and scope of the claims and the equivalent concepts thereof should be construed as being included in the scope of the present disclosure.

**[List of Reference Numerals]**

| | | | |
|---|---|---|---|
| 1: | Secondary battery | 2: | Secondary battery inspection apparatus |
| 10: | Electrode assembly | 11: | Battery can |
| 12: | Electrode uncoated portion | 13: | Current collector plate |
| 14: | Rivet terminal | 15: | Insulating gasket |
| 16: | Insulator | 17: | Can cover |
| 18: | Sealing gasket | 20: | Body |
| 21: | First mirror | 22: | Second mirror |
| 23: | Prism mirror | 24: | Light receiving unit |
| 25: | Adjustment unit | 111 : | Lower part of battery can |
| 112 : | Side part of battery can | 113 : | Opening |
| 114: | Beading portion | 115: | Crimping portion |
| 121: | First electrode uncoated portion | 122: | Second electrode uncoated portion |
| 131: | First current collector plate | 132: | Second current collector plate |
| 141: | Terminal outer portion | 142: | Terminal inner portion |
| 143: | Terminal connection portion | 151: | Gasket outer portion |
| 152: | Gasket inner portion | 153: | Gasket connection portion |
| 171: | Venting portion | 191: | Weld bead |
| 192: | Back bead | 201: | First body |
| 202: | Second body | 251: | Upper adjustment bolt |
| 252: | Lower adjustment bolt | 1321: | Central portion |
| 1322: | Uncoated portion connection portion | 1323: | Can connection portion |
| 1324: | Bridge | | |

## Claims

1. A secondary battery inspection apparatus comprising:
a plurality of first mirrors formed radially to be spaced apart from a central axis of a body by a first radius;
a plurality of second mirrors formed radially to be spaced apart from the central axis by a second radius smaller than the first radius;
a plurality of prism mirrors disposed on the inner side of the plurality of first mirrors and the plurality of second mirrors in a direction of facing the plurality of first mirrors and the plurality of second mirrors, respectively, and formed radially to be spaced apart from the central axis by a third radius smaller than the second radius; and
a light receiving unit that receives light reflected through the prism mirror.

2. The secondary battery inspection apparatus according to claim 1,
wherein the plurality of first mirrors are disposed at an equiangular around the central axis, and
the plurality of second mirrors are disposed at an equiangular around the central axis.

3. The secondary battery inspection apparatus according to claim 2,
wherein the plurality of first mirrors and the plurality of second mirrors are disposed alternately one by one.

4. The secondary battery inspection apparatus according to claim 3,
wherein the plurality of first mirrors and the plurality of second mirrors are disposed at an equiangular around the central axis.

5. The secondary battery inspection apparatus according to claim 1,
wherein the plurality of prism mirrors are disposed at an equiangular around the central axis.

6. The secondary battery inspection apparatus according to claim 1,
wherein the plurality of prism mirrors are formed in the same number as the sum of the number of the plurality of first mirrors and the number of the plurality of second mirrors.

7. The secondary battery inspection apparatus according to claim 6,
wherein the plurality of prism mirrors are each disposed in a direction of facing each one of the plurality of first mirrors and the plurality of second mirrors.

8. The secondary battery inspection apparatus according to claim 1, further comprising:
a camera that is disposed in a direction toward the light receiving unit and photographs light incident on the light receiving unit.

9. The secondary battery inspection apparatus according to claim 1,
wherein the plurality of first mirrors are formed to be inclined at a first inclination angle from the central axis, and
the plurality of second mirrors are formed to be inclined at a second inclination angle smaller than the first inclination angle from the central axis.

10. The secondary battery inspection apparatus according to claim 9, further comprising:
an adjustment unit that adjusts the first radius, the first inclination angle, the second radius, and the second inclination angle.

11. The secondary battery inspection apparatus according to claim 10,
wherein the adjustment unit comprises:
an upper adjustment bolt that moves an upper part of the plurality of first mirrors or the plurality of second mirrors; and
a lower adjustment bolt that moves a lower part of the plurality of first mirrors or the plurality of second mirrors.

12. The secondary battery inspection apparatus according to claim 1, further comprising:
an actuator that rotates the plurality of first mirrors and the plurality of second mirrors around the central axis of the body.

13. The secondary battery inspection apparatus according to claim 12,
wherein the actuator rotates the plurality of first mirrors and the plurality of second mirrors by an angle where the first mirror and the second mirror adjacent to each other are spaced apart.

14. The secondary battery inspection apparatus according to claim 1, further comprising:
a pusher that supports the secondary battery to be inspected from below and rotates around the central axis of the body.

15. The secondary battery inspection apparatus according to claim 14,
wherein the pusher rotates by an angle where the first mirror and the second mirror adjacent to each other are spaced apart.

16. The secondary battery inspection apparatus according to claim 1,
wherein the plurality of first mirrors and the plurality of second mirrors have a viewing angle greater than an angle where the first mirror or the second mirror adjacent thereto is spaced apart.
